# EUROPÄISCHE PATENTANMELDUNG

(11) **EP 0 665 092 A1**
(43) Veröffentlichungstag der Anmeldung: **02.08.1995**
(21) Anmeldenummer: 93121110.6
(22) Anmeldetag: 30.12.1993
(51) Int. Cl.: B29C 44/04

(54) **Schäumautomat zum Herstellen von Schaumstoff-Formkörpern**

(71) Anmelder: SCHLAADT PLASTICS GmbH, D-56346 St. Goarshausen (DE)
(72) Erfinder: Schlaadt, Theo, D-56348 Patersberg (DE)
(74) Vertreter: Kodron, Rudolf S., Dipl.-Ing.

(57) **Zusammenfassung**

Es wird angestrebt, bei einem Schäumautomaten zum Herstellen von Schaumstoff-Formkörpern aus Ausgangsmaterialien verschiedener Dichte mit einem feststehenden Formkasten und einem darin geführten beweglichen Formwandteil (3), die Zufuhrvorrichtung (2) für unterschiedliche Ausgangsmaterialien mit ihrer Austrittsöffnung (1) ortsfest im feststehenden Formwandteil anzuordnen.

Erreicht wird dies dadurch, daß die Austrittsöffnung (1) der Zufuhrvorrichtung (2) für unterschiedliche Ausgangsmaterialien in der rückwärtigen, dem beweglichen Formwandteil (3) gegenüberliegenden feststehenden Formkastenwand (4) angeordnet ist und die rückwärtige feststehende Formkastenwand (4) eine Auswerfvorrichtung (5) -beispielsweise eine Druckluftzuführung- aufweist, die den Formkörper nach Herstellung jedes seiner Teile unterschiedlicher Dichte aus dem feststehenden Formkasten (4,8) herausbewegt und an dem aus dem feststehenden Formkasten (4,8) herausgefahrenen beweglichen Formwandteil (3') zur Anlage bringt.

## Beschreibung

Die Erfindung betrifft einen Schäumautomat zum Herstellen von Schaumstoff-Formkörpern aus Ausgangsmaterialien verschiedener Dichte mit einem feststehenden Formkasten und einem darin geführten beweglichen Formwandteil, einer Zufuhrvorrichtung für unterschiedliche Ausgangsmaterialien, einer Auswerfvorrichtung und mit Dampfkammern an den feststehenden und beweglichen Formteilen.

Ein derartiger Schäumautomat ist beispielsweise aus der Europäischen Patentschrift 0177 621 bekannt. Dieser hat den Nachteil, daß die Zufuhrvorrichtung für die unterschiedlichen Ausgangsmaterialien mit ihrer Austrittsöffnung in einem beweglichen Formwandteil mündet, was die Konstruktion der Zufuhrvorrichtung kompliziert, da diese ortsfeste und ortsbewegliche Teile enthält.

Der Erfindung liegt die Aufgabe zugrunde, diesen Nachteil zu vermeiden und in einem Schäumautomat eine Zufuhrvorrichtung vorzusehen, deren Austrittsöffnung ortsfest angeordnet ist.

Gelöst wird diese Aufgabe nach der Erfindung bei einem Schäumautomat der eingangs erwähnten Art dadurch, daß die Austrittsöffnung der Zufuhrvorrichtung für unterschiedliche Ausgangsmaterialien in der rückwärtigen, dem beweglichen Formwandteil gegenüberliegenden feststehenden Formkastenwand angeordnet ist und die rückwärtige feststehende Formkastenwand eine Auswerfvorrichtung -beispielsweise eine Druckluftzuführung- aufweist, die den Formkörper nach Herstellung jedes seiner Teile unterschiedlicher Dichte aus dem feststehenden Formkasten herausbewegt und an dem aus dem feststehenden Formkasten herausgefahrenen beweglichen Formwandteil zur Anlage bringt.

Wenn in einer gleichen Schicht des herzustellenden Schaumstoff-Formkörpers unterschiedliche Ausgangsmaterialien mit unterschiedlichen Dichten eingefüllt werden sollen, dann empfiehlt es sich, eine zweite oder mehrere weitere Zufuhrvorrichtungen für unterschiedliche Ausgangsmaterialien am feststehenden Formteil anzuordnen, die mit ihren Austrittsöffnungen in der rückwärtigen, dem beweglichen Formwandteil gegenüberliegenden feststehenden Formkastenwand einmünden.

Nachfolgend wird anhand der Zeichnung eine Ausführungsform der Erfindung näher erläutert.

Es zeigen :
- Figur 1: in schematischer Seitenansicht den Schäumautomat mit seinen wesentlichen Bestandteilen
und
- Figur 2 und 3: zwei unterschiedliche Verfahrenszustände im Ausschnitt.

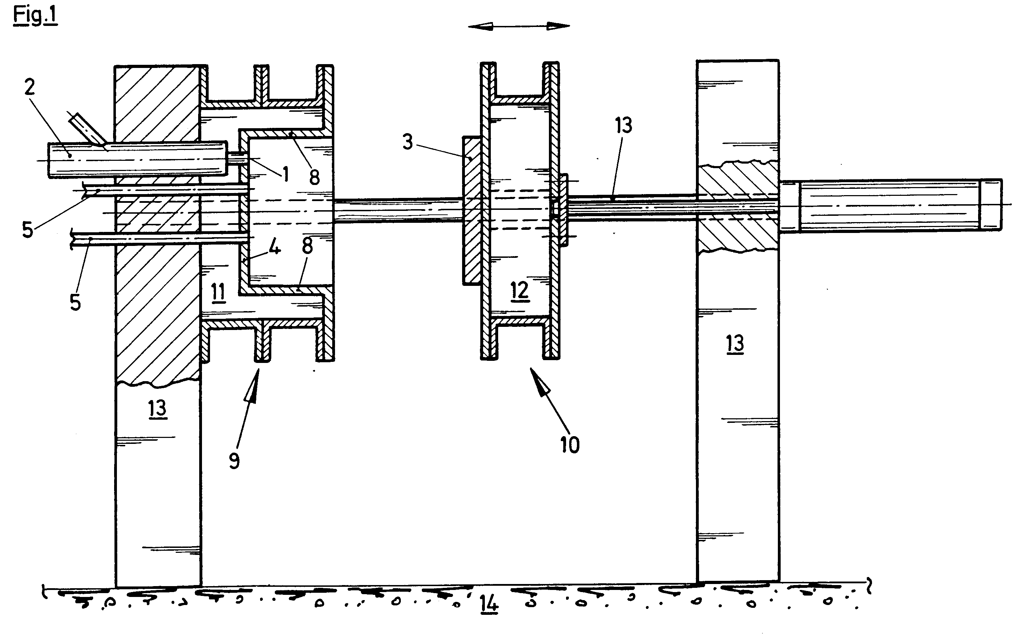

Der in Figur 1 dargestellte Schäumautomat steht mit seinem beliebig gestalteten Maschinenrahmen 13 auf dem Boden 14 und umfaßt ein feststehendes Formteil 9 und ein bewegliches Formteil 10.
Das feststehende Formteil 9 ist mit einer Dampfkammer 11 und das bewegliche Formteil 10 mit einer Dampfkammer 12 ausgestattet.

Das feststehende Formteil 9 enthält eine rückwärtige, dem beweglichen Formwandteil 3 gegenüberliegende Formkastenwand 4 und seitliche Formkastenwände 8.

Das bewegliche Fomwandteil 3 greift in den freien Innenraum des feststehenden Formteils 9 ein und ist durch die seitlichen Formkastenwände 8 geführt.

In der rückwärtigen Formkastenwand 4 des feststehenden Formteils 9 ist die Austrittsöffnung 1 einer Zufuhrvorrichtung 2 für unterschiedliche Ausgangsmaterialien angeordnet.

Die gleiche rückwärtige feststehende Formkastenwand 4 weist auch eine Auswerfvorrichtung 5 -beispielsweise eine Druckluftzuführung- auf, mittels welcher eine erste hergestellte Schicht des Schaumstoff-Formkörpers nach ihrer Herstellung und nach Zurückfahren des beweglichen Formteils 10 so weit ausgestoßen wird, daß diese erste Schicht an dem beweglichen Formwandteil 3 zur Anlage kommt. Dadurch entsteht ein neuer Freiraum unmittelbar an der rückwärtigen feststehenden Formkastenwand 4, in welche die Zufuhrvorrichtung 2 ein Ausgangsmaterial anderer Dichte für eine zweite Schicht des Schaumstoff-Formkörpers einfüllt.

Wenn das bewegliche Formteil 10 danach erneut etwas zurückfährt und die Auswerfvorrichtung 5 den aus den beiden Schichten bestehenden Schaumstoff-Formkörper aus dem feststehenden Formteil 9 herausstößt, dann entsteht wieder ein neuer freier Raum im feststehenden Formteil 9, der danach durch die Zufuhrvorrichtung 2 mit einem neuen Ausgangsmaterial wieder anderer Dichte zur Schaffung einer dritten Schicht des Schaumstoff-Formkörpers ausgefüllt werden kann.

Auf diese Weise entstehen sukzessive unterschiedliche Schichten unterschiedlicher Dichte eines homogenen zusammenhängenden Schaumstoff-Formkörpers, der dann dort beispielsweise als Verpackungsmaterial oder als Baustoff verwendet werden kann, wo Formkörper mit unterschiedlichen Festigkeitseigenschaften benötigt werden.

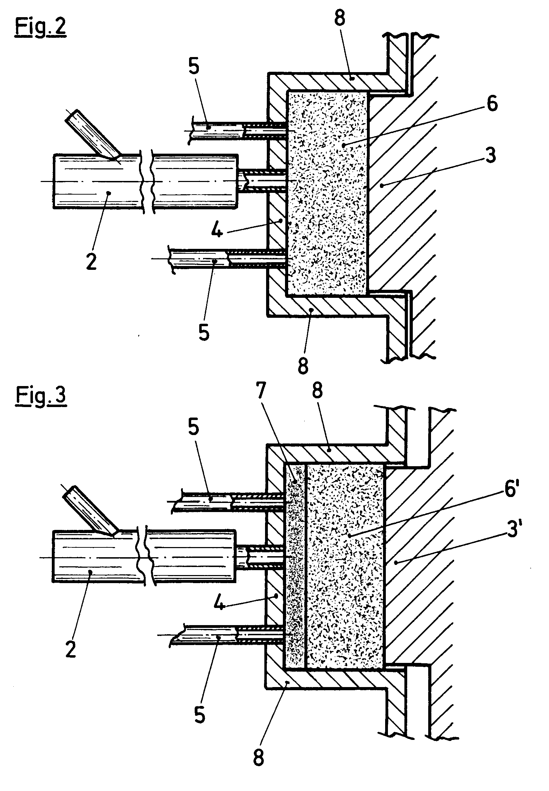

Der in Figur 2 dargestellte erste Verfahrensschritt zeigt eine erste Schicht 6 des in der Herstellung befindlichen Schaumstoff-Formkörpers.

Die in der Figur 3 dargestellte zweite Verfahrensphase zeigt, daß das bewegliche Formwandteil 3 in die Position 3' bewegt wurde und die erste Schicht 6 in die Position 6' verschoben wurde. Letzteres geschieht mithilfe geeigneter Auswerfvorrichtungen 5, 5. Ihr Einsatz schafft unmittelbar an der feststehenden Formkastenwand 4 einen neuen Freiraum zur Aufnahme eines neuen Ausgangsmaterials mit anderer Dichte für die Schaffung einer zweiten Schicht 7.

Der beschriebene Schäumautomat erzeugt somit mit einer feststehenden Zufuhrvorrichtung zwei und mehr Schichten eines Schaumstoff-Formkörpers.

Sollen Schaumstoff-Formkörper hergestellt werden, bei denen die Teile unterschiedlicher Dichte nicht schichtartig nebeneinander liegen, sondern sich abschnittsweise gegenseitig ganz oder teilweise durchdringen, dann sind in den für die Herstellung der ersten Schicht bestimmten freien Innenraum des feststehenden Formteils 9 feste oder lose Verdrängungsvollkörper bzw. Verdrängungshohlkörper einzusetzen, die beim Einfüllen des Ausgangsmaterials für die erste Schicht die gewünschten Abschnitte im Innenraum freihalten, die zur Aufnahme des Ausgangsmaterials anderer Dichte für die zweite Schicht bestimmt sind.
Auf diese Weise lassen sich homogene zusammenhängende Schaumstoff-Formkörper mit unterschiedlichen Schichten unterschiedlicher Dichte herstellen, bei denen die weichere Schicht an bestimmten Stellen in gewünschter Form durch Teile der härteren Schicht durchbrochen und ausgefüllt sind. Diese die weichere Schicht durchgreifenden Teile der härteren Schicht nehmen punktuell den Gewichtsdruck des Verpackungsgegenstandes -beispielsweise eines Eisschranks- auf, wogegen die weichere Schicht das Ver packungsgut ganzflächig und weich abfedernd trägt.

## Patentansprüche

1. Schäumautomat zum Herstellen von Schaumstoff-Formkörpern aus Ausgangsmaterialien verschiedener Dichte mit einem feststehenden Formkasten und einem darin geführten beweglichen Formwandteil, einer Zufuhrvorrichtung für unterschiedliche Ausgangsmaterialien, einer Auswerfvorrichtung und mit Dampfkammern an den feststehenden und beweglichen Formteilen,
dadurch gekennzeichnet, daß
- die Austrittsöffnung (1) der Zufuhrvorrichtung (2) für unterschiedliche Ausgangsmaterialien in der rückwärtigen, dem beweglichen Formwandteil (3) gegenüberliegenden feststehenden Formkastenwand (4) angeordnet ist
und
- die rückwärtige feststehende Formkastenwand (4) eine Auswerfvorrichtung (5) -beispielsweise eine Druckluftzuführung- aufweist,
- die den Formkörper (6,7) nach Herstellung jedes seiner Teile unterschiedlicher Dichte aus dem feststehenden Formkasten (4,8) herausbewegt und an dem aus dem feststehenden Formkasten (4,8) herausgefahrenen beweglichen Formwandteil (3') zur Anlage bringt.

2. Vorrichtung nach Anspruch 1,
dadurch gekennzeichnet, daß
- eine zweite oder mehrere weitere Zufuhrvorrichtungen (2,2,..) für unterschiedliche Ausgangsmaterialien am feststehenden Formteil (9) angeordnet sind,
- die mit ihren Austrittsöffnungen (1,1,...) in der rückwärtigen, dem beweglichen Formwandteil (3) gegenüberliegenden feststehenden Formkastenwand (4) einmünden.

3. Vorrichtung nach Anspruch 1 oder Anspruch 2,
dadurch gekennzeichnet, daß
- Verdrängungsvollkörper oder Verdrängungshohlkörper in dem für die Herstellung der ersten Schicht (6) bestimmten freien Innenraum des feststehenden Formteils (9) eingesetzt sind,
- die beim Einfüllen des Ausgangsmaterials für die erste Schicht (6) bestimmte Abschnitte im Innenraum freihalten,
- welche Ausgangsmaterial anderer Dichte der zweiten Schicht (7) aufnehmen.
